# EUROPEAN PATENT APPLICATION

(11) **EP 1 898 386 A1**
(43) Date of publication of application: **12.03.2008**
(21) Application number: 06767154.5
(22) Date of filing: 22.06.2006
(51) Int. Cl.: G09F 19/00, G06Q 10/00, G06Q 30/00

(54) **WEB ADVERTISEMENT SYSTEM AND WEB ADVERTISEMENT PROGRAM**

(30) Priority: 23.06.2005 JP 2005182953
(71) Applicant: Notomi, Seiji, Shinjuku-ku Tokyo, 1600023 (JP)
(72) Inventor: Notomi, Seiji, Shinjuku-ku Tokyo, 1600023 (JP)
(74) Representative: Zimmermann, Gerd Heinrich
(86) International application number: PCT/JP2006/312496
(87) International publication number: WO 2006/137479

(57) **Abstract**

Disclosed is a web advertisement system to display a web page which gathers only categories to which a sponsor has interest and displays them. Server 15 has a user registration means 22, an information category selection means 23 which executes selection of the classified information concerning categories, a category getting means 24 which gets the information category 24, a memory device 30 which memorizes the user information 33 and category 34, a cluster getting means 25 which gets user cluster 35, using user information 33, a display editing means 27 which makes automatically an advertisement display 37, and a display control means 28 which displays an advertisement display, together with the web page of user selection.

## Description

### BACKGROUND OF THE INVENTION

### 1. Field of the Invention

The present invention relates to a web advertisement system and a web advertisement program with which sponsors can select and advertise effectively suitable users.

### 2. Description of the Related Art

Advertisement using direct mails or mail magazines have been very active in these days. With these media, sponsors can target specific customers, assumed to have interests to their contents, or effective advertisement can be made with these tools. These advertisements tools which interest customers will become powerful. Besides unilateral advertisement, such as internet and TV broadcasting, bilateral advertisements have developed, with the use of data communication systems and gathering various customers' information. They can get various kinds of information from customers.

[Patent document 1] JP, 2003-087827
[Patent document 2] JP, 2002-358263
[Patent document 3] JP, 2002-259794
[Patent document 4] JP, 2001-344376

### PROBLEMS TO BE SOLVED WITH THE INVENTION

Personal information such as customers' address, age, gender, ideas and interests are gathered using various kinds of questionnaires at advertisement campaigns. However, these information gathered from questionnaires are not reliable and the effect of advertisement, using mail magazines etc. are not clear. You can make customers' list, when you sold some special equipments etc. to the users who have special hobbies, for an instance. But number of such kinds of users is not enough to get profit by issuing special magazines for them. On the other hand, advertisements on general papers or magazines seldom attend the interests of the corresponding customers. Internet advertisement is useless for users who don't use internet. Any ways, the problem is that there is no effective advertising way, even if you collect information, using a large sum of money. This invention is made for the solution to these problems. Effective advertisements for special customers' interests and characters can be made possible with this invention, that is a web advertisement system and a web advertisement program.

### MEANS TO SOLVE ABOVE PROBLEMS

### <Configuration 1>

A web advertisement system comprising: a memory device which memorizes web pages set in a web server on a web site comprising; a user registering means which accepts the input of the information concerning a user who registers himself or herself with said web site, and memorizes the data on said memory device; an information category selection means which selects the categories at the time of searching when said registered user makes or browses web pages; a cluster getting means which gets a cluster from the information of said registered user who makes or browses said web pages and memorizes the information on said memory device; a category getting means which gets the category information of said registered user selection of web pages, and memories the information on said memory device; an advertisement selection means which gets advertising information specified with the combination taken with said cluster getting means and said category getting means; a display editing means which makes automatically an advertisement display, using said advertisement information, gotten by said advertisement selection means; and a display control means which controls to display an advertising display together with the web pages, browsed by said user.

### <Configuration 2>

A web advertisement system according to configuration 1, wherein comprising; a real time control means which detects, at time of said user's web page making, that said category selection means executed the corresponding web page selection process, starts said cluster getting means and said category getting means, sends the output to said advertisement display editing means, and controls said advertisement display to display the advertisement display made by said display editing means, together with said selected web pages.

### <Configuration 3>

A web advertisement system according to configuration 1, wherein comprising; a real time control means, which controls said memory device to memorize the results of the past output of category selection, including user information, detects said user's login to said web site, starts said cluster getting means and said category getting means, controls the category getting means to get category from said user information, sends the output to said display editing means, and controls to display the output, made by said display editing means, together with the selected web page.

### <Configuration 4>

A web advertisement system according to any of configuration 1 to 3, wherein; the same advertisement display still displaying, even when the browsing web page is changed, during the same user's operating time.

### <Configuration 5>

A web advertisement system according to any of configuration 1 to 3, wherein said advertisement display comprising; control buttons for selection of web pages with the corresponding advertisement.

### <Configuration 6>

A web advertisement system according to configuration 5, wherein comprising: first counter which, in case when control buttons for a sponsor are included on said advertisement display, counts the access numbers to the corresponding advertisement display; second counter which counts, when said control buttons are clicked, the displayed numbers of the web page, including the sponsor's advertisement; and a advertisement charge calculating means, which calculates charge for the sponsor, with first counter number and second counter number.

### <Configuration 7>

A web advertisement system according to configuration 1, wherein: said memory device memorizes the database of user accessed themes which are classified according to each category; said information category selection means which, with users' operation, searches said data base and executes said users' selection; and said cluster getting means which gets user cluster, using user information, inputted at the time of said user's operation for application.

### <Configuration 8>

A web advertisement system according to configuration 1, wherein; every time when said user selects categories from upper to lower, a real time control means starts said cluster getting means and said category getting means to update the advertisement display to correspond the category.

### <Configuration 9>

A web advertisement system according to configuration 1, wherein: said advertisement charge calculation means makes said memory device to memorize the access numbers of all categories and cluster combinations; and displays the count number and the corresponding charge of browsed web pages, in combination with the sponsor ordered category and the cluster.

### <Configuration 10>

A web advertisement system according to configuration 1, wherein: the advertisement charge calculation means memorizes the count numbers of browsed web pages in combination with all categories and clusters in memory device; and when the advertisement charge calculation means calculates and displays the count number and charge to each sponsor, displays also the count and the charge corresponding to the combination of category and user cluster, to the range previously decided for each sponsor, which the sponsor did not order.

### <Configuration 11>

A web advertisement program for a computer set on a web server to operate the system comprising: a memory device which memorizes web pages set in a web server on a web site comprising; a user registering means which accepts the input of the information concerning a user who registers himself or herself with said web site, and memorizes the data on said memory device; an information category selection means which selects the categories at the time of searching when said registered user makes or browses web pages; a cluster getting means which gets a cluster from the information of said registered user who makes or browses said web pages and memorizes the information on said memory device; a category getting means which gets the category information of said registered user selection of web pages, and memories the information on said memory device; an advertisement selection means which gets advertising information specified with the combination taken with said cluster getting means and said category getting means; a display editing means which makes automatically an advertisement display, using said advertisement information, gotten by said advertisement selection means; and a display control means which controls to display an advertising display together with the web pages, browsed by said user.

### <Configuration 12>

A computer readable medium memorizing advertisement program, having the function to operate the system comprising: a memory device which memorizes web pages set in a web server on a web site comprising; a user registering means which accepts the input of the information concerning a user who registers himself or herself with said web site, and memorizes the data on said memory device; an information category selection means which selects the categories at the time of searching when said registered user makes or browses web pages; a cluster getting means which gets a cluster from the information of said registered user who makes or browses said web pages and memorizes the information on said memory device; a category getting means which gets the category information of said registered user selection of web pages, and memories the information on said memory device; an advertisement selection means which gets advertising information specified with the combination taken with said cluster getting means and said category getting means; a display editing means which makes automatically an advertisement display, using said advertisement information, gotten by said advertisement selection means; and a display control means which controls to display an advertising display together with the web pages, browsed by said user.

### EFFECT OF THE INVENTION

According to configuration 1, a user cluster can be obtained when user registration is executed, and the category information which a user wants to get, can be obtained. According to the sponsor's order, advertisement contents, corresponding to the user cluster and the category information, can be edited and displayed. The ordered advertisements concerning the categories to which users have interest, can be gathered, and displayed on the web pages. As it is clear that users have interest to the displayed categories, the click number to the banner of this advertisement can be much expected to increase. Besides, this advertisement display will be comfortable for users and users' satisfaction will increase.
According to configuration 2, when a user registers and selects a category, the advertisement display on the web page will be real timely up-dated. So, just after user's registration, the user can utilize an advertisement display which matches to his or her ideas.
According to configuration 3, just after a registered user login, the advertisement display of web pages will be edited to the one which matches the user, and displayed. So, he can browse his matching advertisement display, just after his login.
According to configuration 4, a web site has plural web pages, users can browse freely any web page. The advertisement display will be constantly displayed, for instance, on the right side of the web page, even if the remaining part of the display is changed. The advertisement display, opened for each user, can be constantly displayed to rise the effect of advertisement. Advertisement charge can be easily estimated.
According to configuration 5, advertisement display can be made with banners for exclusive use of a user. Advertisement display can be speedy edited with real time editing processing.
According to configuration 6, advertisement charge can be estimated and demanded, based on count number of effective advertisement display. Even advertisement charge of commercial goods for very small number of users, for instance, can be properly estimated.
According to configuration 7, if every theme is classified according to each category, a user's selected theme can be correctly searched. In the system in which various themes are supplied, using network, an effective advertisement can be established.
According to configuration 8, even at every time of the user's selecting process, an advertisement display can be made and displayed, corresponding to each category.
According to configuration 9 and 10, as the advertisement charge is displayed according to every category and user cluster, based on the past results, the advertisement request using this system can be optimized.

### BRIEF DESCRIPTION OF THE DRAWINGS

FIG. 1 is a block diagram showing an example of a web advertisement system operating according to this invention;
FIG. 2 is an explanation diagram showing an example home page according to this invention;
FIG. 3 is an explanation diagram showing a display for user registration according to this invention;
FIG. 4 is an explanation diagram showing a concrete example of category selection table according to this invention;
FIG. 5 is an explanation diagram showing another web page according to this invention;
FIG. 6 is an explanation diagram showing a display made for an answer to a question by a solver, according to this invention;
FIG. 7 is a flow chart showing a fundamental operation of a server according to this invention;
FIG. 8 is an operation flow chart showing real time operation of control procedure according to this invention;
FIG. 9 is an explanation diagram showing user login process according to this invention;
FIG. 10 is a flow chart showing calculation means of advertisement charge according to this invention;
FIG. 11 is an operation flow chart of an acceptance means of a sponsor according to this invention;
FIG. 12 is an explanation diagram showing a display example of a calculation of advertisement charge estimate to sponsors according to this invention;
FIG. 13 is an explanation diagram showing an advertisement charge estimation to sponsors according to this invention; and
FIG. 14 is an explanation diagram showing an example report of advertisement effect to sponsors according to this invention.

### DESCRIPTION OF NOTATION

- 10: Net work
- 15: Server
- 11, 12: Terminal equipment
- 20: Operation processor
- 30: Memory device
- 21: Login control means
- 22: User registration means
- 23: Information category selection means
- 24: Category getting means
- 25: Cluster getting means
- 26: Advertisement selection means
- 27: Display editing means
- 28: Display control means
- 29: Real time control means
- 31: Web pages
- 32: Category selection table
- 33: Users' information
- 34: Category
- 35: User cluster
- 36: Advertisement selection information
- 37: Advertisement display
- 38: First counter
- 39: Second counter
- 40: Banner list
- 41: Advertisement web page
- 50: Banner database

### DETAILED DESCRIPTION OF THE PREFERRED EMBODIMENTS

The present invention provides users a friendly environment, and manages a web site which is open only to registered users. For instance, in case of free fee, minimum permission information of users, will make it easy to register for users. Web pages used in this web site are used mainly for the exchange of information between the registered users. For instance, there is a web page "Teach me" and "Teach you". The contents of the web page are not limited. The wider of the range, the better. These web pages are classified to their categories. Web pages are managed with the charge of the advertisement displayed on the web pages. Sponsors order on what web page they want to display their advertisements. Sponsors will read web pages of the categories in which they have interest, and they don't read web pages of the categories in which they don't have interest. Therefore, it will be most likely that the advertisement which has some connection to the categories, can be browsed by users. That will be the same effect of advertisements on specialized magazines.
For another instance, let us consider the case that users' information are classified in the field of living area, age, and gender. When a sponsor reads web pages, he can get information that users, having some specialized users' information, have browsed web pages of specialized categories. If users' information is correctly protected in the web site and users can register in the web site without hesitation, the users' information is very reliable. So, the information that a certain user has browsed a certain web page of a certain category, is a very reliable one. And sponsors can get the effect of an advertisement on target users, with the feedback of this information. Also, sponsors can get effective specified information of target users. This information is finely subdivided, and advertisement charge can be estimated with each category. The real results of the past can be reflected to advertisement charge estimate.

### [Example 1]

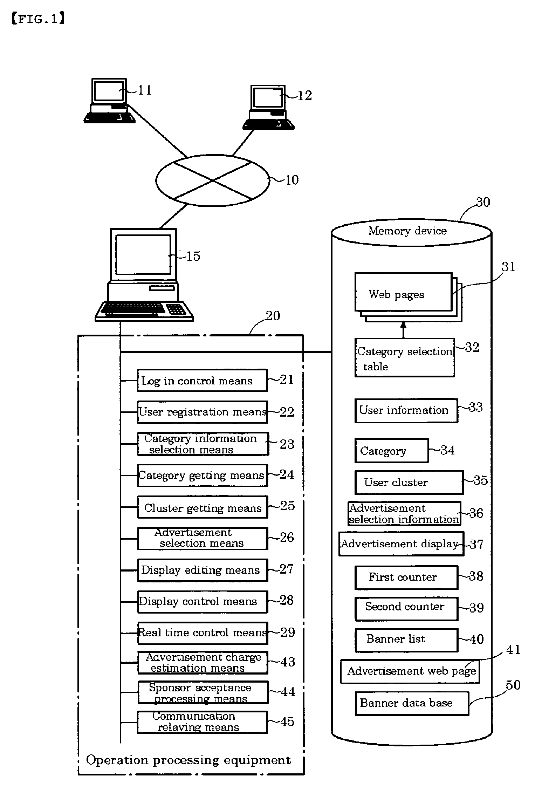

FIG. 1 is a block diagram showing an example of the web advertisement system operation according to this invention. Net work 10 is a wide network such as internet etc. Server 15 which manages a web site is connected to network 10. Users' terminal equipments 11 and 12 are also connected to network 10. Users can make and/or browse web pages on the web site. There is no problem if any other terminal equipment where users can browse web pages is connected to network 10.

In server 15, operation processor 20 and memory device 30 are provided. In calculation processing device 20, login control means 21, users registration means 22, information category selection means 23, category getting means 24, user cluster getting means 25, advertisement selection means 26, display editing means 27, display control means 28, and real time control means 29 are provided. The computer in server 15 are installed with these computer program module to have certain operation function. In memory device 30, web pages 31, category selection tables 32, user information 33, categories 34, user cluster 35, advertisement selection information 36, advertisement display control 37, first counter 38, second counter 39, banner list 40, and advertisement web pages 41 etc. are memorized in the memory device 30.

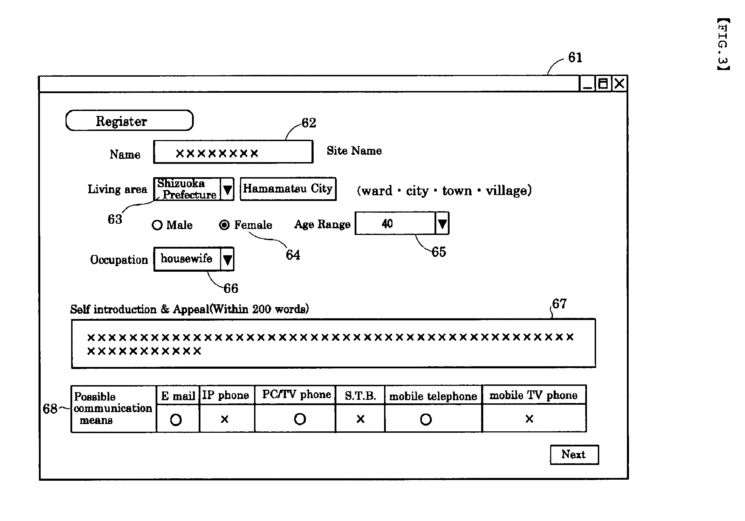

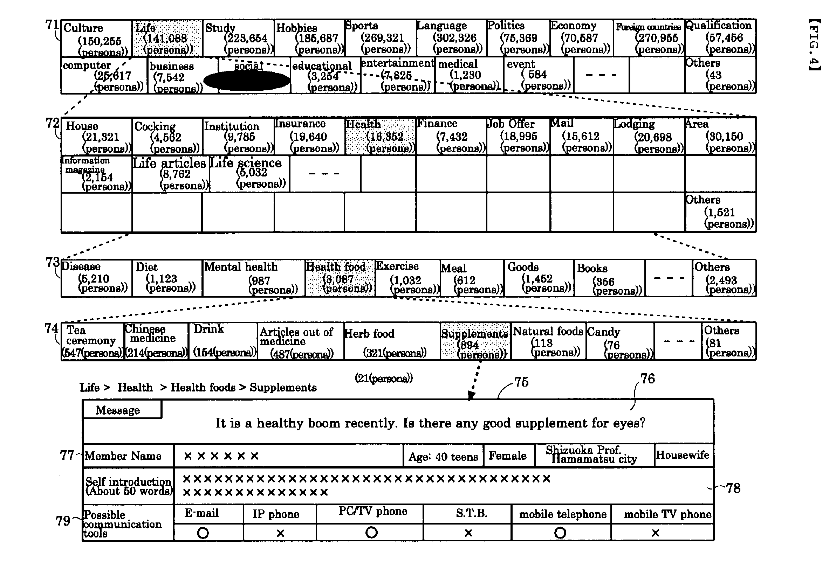

Web pages 31, memorized in memory device 30, are HTML data or XML data etc. These data are open to terminal equipments through network 10. Category selection table 32, which is explained later using FIG 4, is searching tool data to select the classified category web pages 31, or data included in web pages 31. Web pages 31, or information included in web pages 31 are classified according to each category. It is recommendable that the corresponding information are quickly outputted at the time when category data are inputted. Users information 33 are data for classification and discrimination of registered users. This data structure will be explained, using FIG 3.

When a registered member(user) logs in server 15, login control means 21 in operation processor 20, execute fixed process operation. As is widely known, not illustrated in figures, a control display requires password input and executes login process. After login process, users can browse web pages in the web site. User registration means 22 requires necessary information input and produce personal information 33. In other words, at the time of new user registration, the new user's information data are classified and memorized. User registration means 22 will be explained later, using FIG 3.
Information category selection means 23 selects information, displayed on web pages 31, using category selection table 32. Each web page has at least one category. Each web page is made by each user. Users make web pages, after they selected categories. So, each time when a web page is made, automatically selected category is added to the web page. In the same way, each time when a web page is browsed, its category is selected at first, and the user gets the web page lists, having his desired category, after selecting categories. According to information category selection means 23, a display, selected by the user is displayed, and the display changes according to user's selection. Category information will also be up-dated. Category getting means 24 gets category 34 with the process of information category selection means 23 and memorize it in memory device 30. At the same time, the up-dated category selection table 32 is opened. The category data, gotten at the time, are used to make advertisement selection information.

Category data 34 classify web pages according to their properties. Generally, categories have their codes. Both letters and number characters can be used in this example. When a user logs in, cluster getting means 25 gets user cluster data 35, to which cluster information belongs, and memorizes the information in memory device 30. This user cluster data 35 are used to make advertisement selection information. User cluster data 35 are for the classification according to their property. In this example, user information data 33, such as site name, city code which shows user living area, gender, age, and occupation, are included. These information are accepted as user cluster 35. These user information can be classified to answer sponsor needs. If you don't require fee from the users who use this site, you need not process user information any more. For many users to use this site easily, it is preferable to require minimum user information. In other words, it is most preferable that user information consists with minimum personal information to classify according to its property, and it is impossible to identify persons with the information. Because personal information is protected in this case. For user information, it is enough to specify users in the previously identified range with discriminating information: site name information, living area information, age information and gender information.
In this example, information of users' "possible communication procedure" is included. This information is used only for the communication between a server and users, and does not open to other users. Communication relaying means 45(in FIG 1) relays communication message to any user, when they accept communication requirement. Mails, faxes, and audio signals can be relayed. It is preferable that it has the translation function of e-mail message to fax. In this web site, personal information is perfectly protected, and all users can freely exchange messages to each other.

Advertisement selection means 26 gets advertisement selection information corresponding to user cluster 35. In this example, advertisement selection information is the key information to display a banner from banner database 50, together with the web page. Advertisement selection information can be specified with the combination of category 34 and user cluster 35. Namely, it contains user cluster 35, and corresponds a banner displayed together with web page, classified with category 34 and user cluster 35. It is recommendable for all web pages to correspond banners displayed together with them. Display editing means 27 arranges selected banners and edits banner list 40, and makes a display, displayed together with the web page. This display becomes one of the web pages 31. Display control means 28 makes advertisement display 37, including any one of web pages in the web site. And they can make terminal equipments to display them through network. They also have the function of displaying advertisement web pages 41 at the time when a banner is clicked.

A web site is managed by a server. The server has a memory device 31 which memorizes web pages. Only registered users can make and browse in the web site. It is preferable for server 15 to have the function of opening web pages through internet. Required users' information at registration time is optional. Cluster analysis is an analysis means to discriminate resembling data from not resembling data. A cluster is a resembling data group. In this example, information data to classify users is called "user cluster". For instance, classification of female in her forties, living in Kanagawa prefecture is a user cluster.
All kinds of information on web pages can be browsed by users. Users can browse web pages and can select classified information of categories. For an instance, classified information of categories is selected in the order like big classification, middle classification and small classification. With the execution of selection process, information category, browsed, can be finally specified.

Category getting means 28 gets, in real time, categories which are selected by users in these ways. In this example, each web page has one category. Besides, on the web page, the part which shows the user cluster is included. So, at the time when user browses the web page, it can be understood that the user who are browsing the web page is, for instance, a female in her forties, living in Kanagawa prefecture. Therefore, effective advertisement displays can be displayed, targeting the persons who has the same kind of living area, age, and hobby. The advertisement display 37 can be an advertisement display itself, or, an index or a banner for advertisement display. Advertisement display 37 may be a part of the web page which users browses, or one independent web page. Display 37 up-dates itself in real time when it is included in a part of web pages.

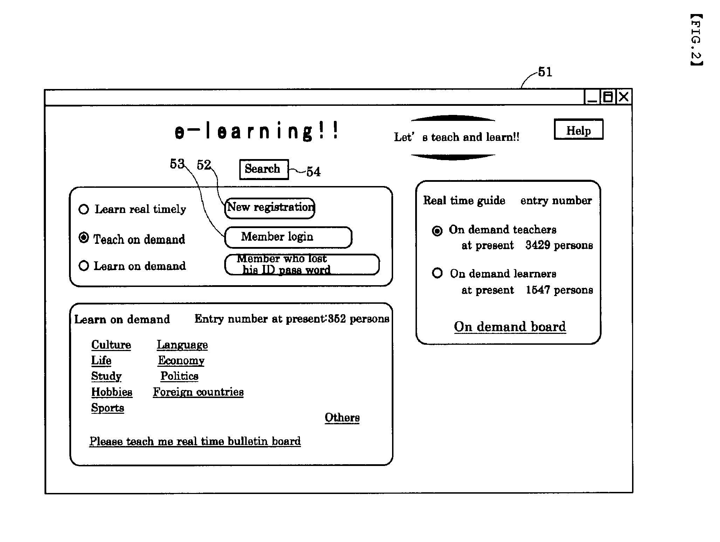

FIG. 2 is an explanation diagram showing an example home page according to this invention.
As showed in this figure, home page 51 of web site managed by server has buttons 52, 53, and 54. Button 52 is an application click button for a new user registration. Button 53 is a login click button for a registered user. Button 54 is a searching click button for category search.

FIG. 3 is an explanation diagram showing a display for user registration according to this invention.
On display 61, text box, and dropdown list 63 for selection of users' living area are displayed. Besides, selection button 64 for gender, selection button 65 for the input of users' teens, and selection button 66 for users' occupations are displayed. To add these, line 67 for the input of user's self-introduction or appeal is displayed. To add this, selection buttons of possible communication tool is displayed. User registration is finished after the input all of these items, with the click of "Register" button. User information 33 is the memories of these items, memorized in memory device 30 in the database form. User cluster is decided with the information of her living area, gender, age, occupation. Self-introduction appeal is used to understand the applicant for other users. The possible communication tools are used for users' information exchange with each other.

FIG. 4 is an explanation diagram showing a concrete example of category selection table according to this invention.
For instance, let us consider the case that a user select "life" in the left down side of the window display 51 in FIG 2. When she clicks button 54, in classification list 71 which is on the uppermost line in FIG 4 is displayed. As is displayed in the figure, FIG 4 classification list 71 is a big classification category, such as culture, life, study, and hobby. Gray colored "life" shows that the item was selected. When "life" item was selected, the second classification list 72 is displayed. Next, one of the item in middle classification list 73, showing house, cocking, facilities, insurance, health, and finance, is selected. Let's consider the case, for instance, "health" is selected. Small classification list 74 is displayed, showing categories, such as disease, diet, mental health, health foods, and exercise are displayed. At this position health foods is selected, and the lowest level classification list 74 is displayed. Here supplements is selected and category selection is finished. In this example, the category 34 of web page is "life > health > health foods > supplements".

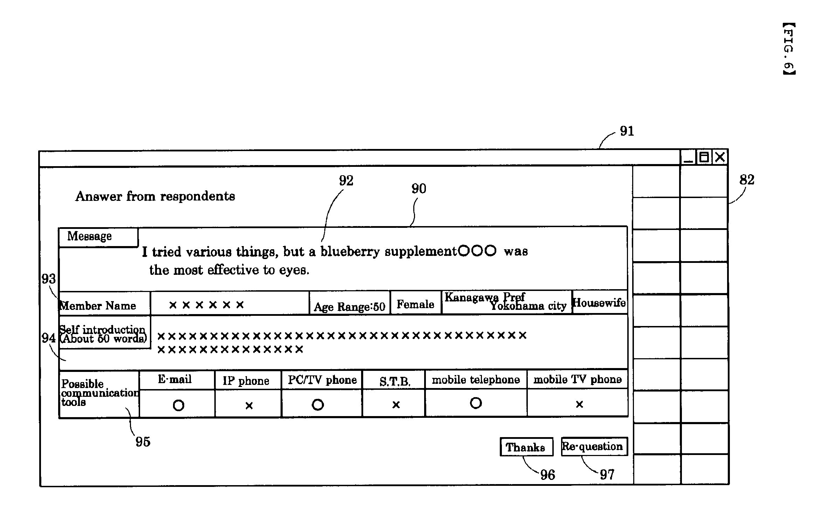

After the category is decided, as described above, input display 75 for users who want to learn, is displayed. Display 75 has the line 76 for the enter of user's optional question. This display 75 is not only a display for question enter, but also a web page for other registered users(members). For other users' browsing, line 76 for question, category display, all or a part of user's information 77, communication tool 79 are displayed. It is more preferable to display line 78 for self-introduction. This web page is classified according to the category, and memorized in memory device 30, or in other words, added to the web pages stored in the memory device. Other users select their favorite categories or good categories, and browse them. Some of them find categories they can answer, and write their answer, using display 91 in FIG 6. The answer is received by the questioner, using one of the communication tool displayed in line 79. For instance, when an answer web page is made for the web page made by the questioner, the web page is added to the web pages in memory device 30. And it is preferable to notice automatically, using E mail, that the questioner got the answer, and the answer web page URL. Of course, it will be advisable to notice the respondent the mail address he can contact to answer directly. Real time control means 29 executes these control.

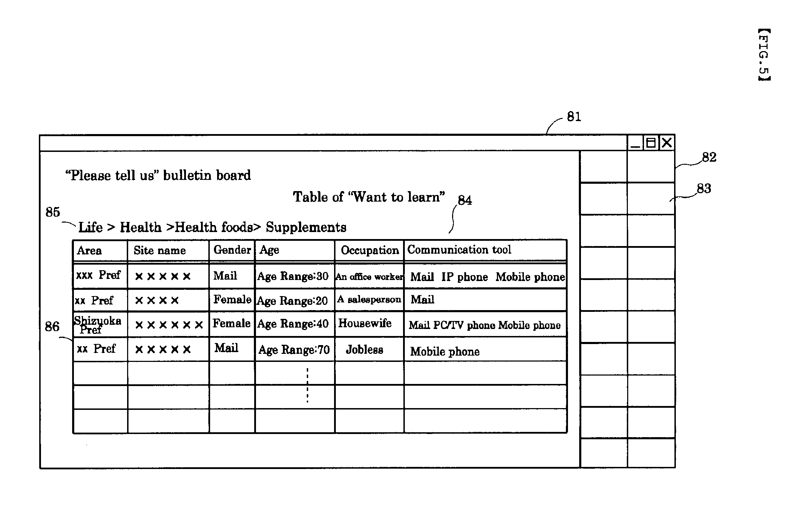

FIG. 5 is an explanation diagram showing peoples who want to know.
If "e-learning!!" characters were clicked on the display 51 showed in FIG 2, display 81 is displayed in FIG 5. On display 81, "Want to learn" list 84 is displayed. "Want to learn" list 84 is displayed, for instance, with the category classification. Accordingly, if a category is selected on display 51 in FIG 2, and then if "Please teach me real time" bulletin board is required to display, display 51 in FIG 5 is displayed. At top, category 85 is displayed. "Want to learn" list 84 displays part of users' information such as living area, age, occupation, communication methods. Those who have interest in the same category and have inputted same kind messages, are listed in the form of user cluster. On this display, for instance, if one of the user site name is clicked, display 75 in FIG 4 is displayed.

User in this example has interest in health food supplement. Accordingly, if supplement food advertisement is displayed together with display 81, it will be most possible that the user will browse the advertisement. And it is possible to identify systematically the user at the time of login. And, it is possible to know the user cluster automatically. So, at the right side of the display, advertisement display 82, edited with the corresponding user category is displayed. In this example, advertisement display 82 is edited with banner list 40 only (FIG 1). Advertisement display 81 is maintained unchanged, even if the left part of the display is changed. If any of banner 83 is clicked, an advertisement web page 41, made by a sponsor (shown in FIG 1), will be displayed. With this action sponsor can be introduced. Moreover, it can be possible for the user to be lead to sponsor's home page.

FIG. 6 is an explanation diagram showing a display made for an answer to a question by a respondent according to this invention.
As is shown, on display 91, "Answer from respondent" 90 is displayed. Respondents can input message on this line 92. Lines 93, 94, and 95 are buttons, having same operation with buttons in display 75 in FIG 4. As the respondents are also users in the web site, the information is displayed. So, though it is not displayed, the information of respondents can also be displayed on a display, having quite same contents. Users on the list 81, displayed on the display 91 in FIG 6 have same interest. So, the advertisement display, edited in correspondence with the user category will be effective, if it is displayed on the right side of the display. Furthermore, buttons 96 and 97 are displayed. Button 96 is the button to mail to the answerer to say thank you. Button 97 is the one to ask again.

### [Example 2]

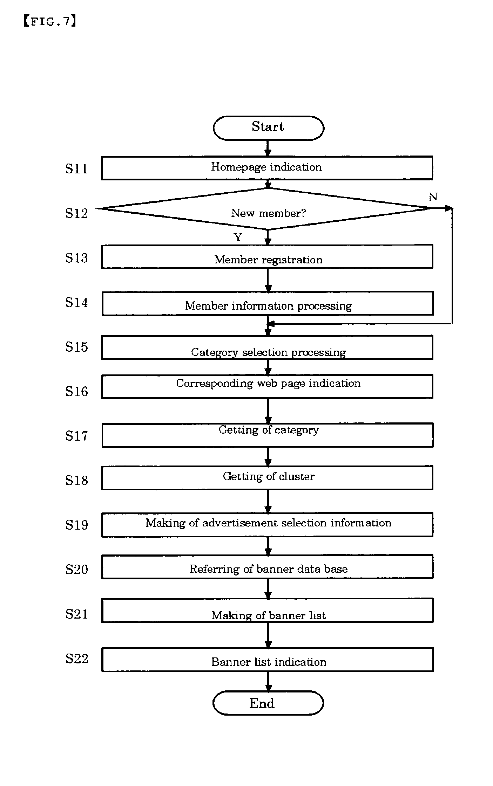

FIG. 7 is a flow chart showing a fundamental operation of a server according to this invention.
With this figure, a computer program to execute the present invention will be explained. The program starts at the time when a user accesses server 15 with a terminal equipment 11 in FIG 1, and begins to browse home page. As is shown in step S11, server 15 displays, according to the user's access, home page 51 in FIG 2. Server 15 judges if the user is a new user or not (step S12). In case of new user, program flow goes to step S13, and user registration is executed, using user registration means 22. At step S14, display 61 is displayed, and the inputted user information 33 are memorized in memory device 30.

The user who has finished registration, executes member login, clicking button 53 in FIG 2. In this example, the user selects "on demand teaching", or "on demand learning". In case of "on demand learning" selection, display 75, shown on the downward part of FIG 4, is displayed. In case of "on demand learning" selection, display 81 in FIG 5 is displayed, and after that, display 91 in FIG 6 is displayed with user's selection. In any case, searching button 54 is clicked at first, and in Step 15, category selection process is executed. After category selection process is executed, display 75, or display 81 is displayed. Display 75, or display 91 is a web page in category, classified under selection. When display 75 is displayed, and when display 91 is displayed, user information 33 of the browser is gotten, and it is preferable that the user cluster in Line 77 on display 75, or user cluster in Line 93 on display 91 is automatically displayed. For this process, it is enough for information category selection means 23 to be executed. When searching button 54 in display 51 is clicked, information category selection means 23 classification lists 71 to 74 shown in FIG 4 are displayed, controlling information category selection process. Step S16 is the process which displays the corresponding web pages. At step S17, category getting means 24 gets category data 34, with category selection process, and memorizes the data in memory device 30. At step S18, user cluster data gets user cluster 35 included in the displayed web page. At step S19, advertisement selection means 26 makes advertisement selection information 36, corresponding to the combination of category and user cluster. This advertisement selection information 36 is, for instance, the information to select advertisement target only for a woman who is in her 40 teens, lives in Shizuoka prefecture, and has interest in supplements of health food. At step S20, referring banner database, corresponding banner is selected according to banner list 40. Next, at step S21, banner list 40 is made. Advertisement display 37 is displayed on the browsing display together with web pages. As the result, displays, shown in display 5 or 6, are displayed.

### [Example 3]

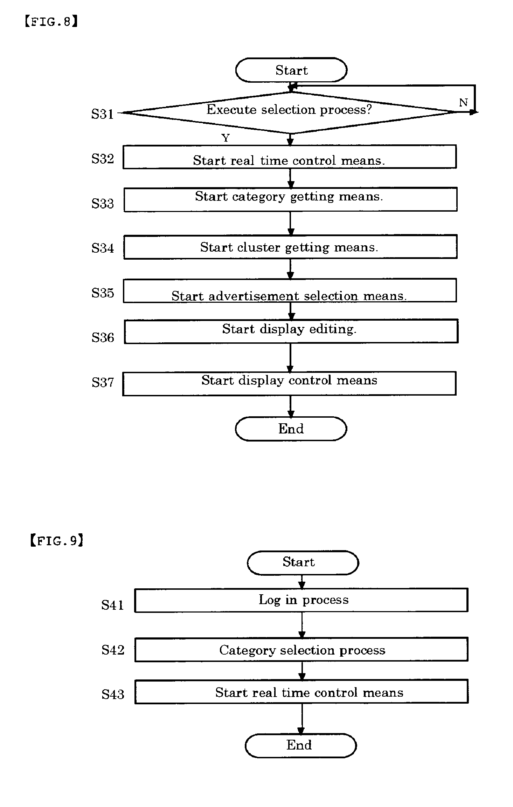

FIG. 8 is an operation flow chart showing real time operation of control procedure according to this invention.
It is preferable that the banner list making is executed on real time. Namely, it is preferable that banner list is made automatically, at the time when a user selects category. This flow chart is for the control. At step S31, when the category selection means 23 is executed, the real time control means 29 is automatically started. At step S34, advertisement selection means 26 is started. At step S36, display editing means 27 starts to run. At step S37, display control means begins to run. As above mentioned, each process runs automatically. Advertisement display 37 is made in real time and controlled to be displayed together with the web page.

### [Example 4]

FIG. 9 is an explanation diagram showing user login process according to this invention.
Just before step S15, user login process is executed. At step S41, login display, not illustrated here, is displayed, and user name and his password is displayed. Here, display 51 in FIG 2 is displayed. At step S42, category selection process is executed. After that, at step S43, real time control means 29 starts automatically. Processes after that are same kind with step S32 and their followings in FIG 8. Accordingly, the explanation corresponding them are omitted here.

Besides, real time control means can be operated in various ways. Not only at browsing time, but also at web page making time, an advertisement display, corresponding user cluster and category, can be displayed. And for instance, it can be possible that the information data of category, which the user selected last at the time of web page making or browsing, are memorized, and the information is referred at the time of user login again. Indication to get category data can be outputted from information category selection means to category getting means. With this process, advertisement display, corresponding to user cluster and category, can be displayed at once. So, various kinds of advertisement display services can be executed. It is preferable that user cluster data are used as long as the same user is in the web site, namely till the time of logout.

It is also preferable that when a user select category from upper level to lower level, at each category selection stage, real time control means starts user cluster getting means and category getting means, and updates the advertisement display, corresponding each category. With this process, users can recognize intuitively the process ways how the advertisement contents are squeezed. Users may be strongly appealed with the system.

### [Example 5]

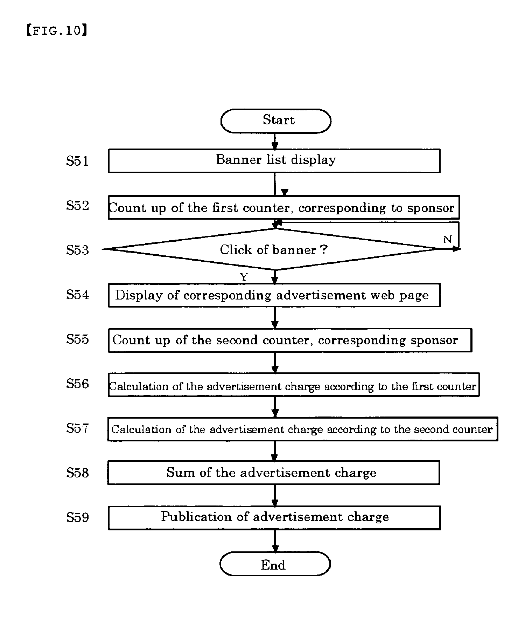

FIG. 10 is a flow chart showing calculation means of advertisement charge according to the present invention.
In this system, advertisement display is displayed at the same time when display 75 in FIG. 4, display 81 in FIG. 5, or display 91 in FIG. 6 is displayed. The advertisement content of advertisement display is the one targeting for a certain user cluster, having interest to a certain category. It is highly expected that it will have an effective result. Advertisement content of the advertisement display is a banner list. Accordingly, advertisement charge is levied at the time this banner is displayed. For this purpose, every access time to the advertisement display is counted. At every time when a user accesses displays 75, 81, or 91, numbers of all banners having connection to the corresponding advertisement displays are accumulated. There will be no problem if the user who accessed displays 51 or 61, did not do anything. Advertisement charge is required with the accumulated access number. Advertisement charge can be again levied at the time when a user clicks banner included in an advertisement display. Another advertisement charge can be levied when sponsor's URL on the advertisement web page is clicked. Besides, advertisement charge levying system can be created on the category selecting process "life > health > healthy food > supplement".

The corresponding advertisement displays can be created and displayed at the selection process going to "life > health > healthy food". The number of banner displayed at going to "life > health > healthy food" will be smaller than that of banner at going to "life > health > healthy food > supplement" than that of banner at going to "life > health > healthy food". There will be some banners which are displayed only once on the way to "life > health > healthy food > supplements". Anyway, advertisement impact will be created at each stage. So, the charge can be calculated with the counter number at each stage. In the next example, charging system will be explained with the case when a banner is displayed and clicked. Advertisement charge can be levied in other case.

FIG. 10 is a flow chart showing calculation means of simplest advertisement charge according to this invention. At first at step S51, banner list 40 is displayed. Next at step S52, counters of the corresponding sponsor are selected. The first counter 38 and the second counter 39 are prepared, according to each sponsor. The first counter of the corresponding sponsor in banner list counts up at the time when advertisement display is displayed according to display editing means 27.

Next, at step S53, when a user clicks a banner, the corresponding web page is displayed at step S54. At that time, the second counter of the corresponding sponsor counts up. Another kind of charge is prepared for the case that sponsor's web pages are opened, adding the banner selection. Accordingly at step S56, advertisement charge for first counter is calculated, and another charge for the second counter is calculated at step S57. At step S58, these charges are summed up. In these ways charges are calculated and demanded. Web site cost can be made low with this automatic execution process.

### [Example 6]

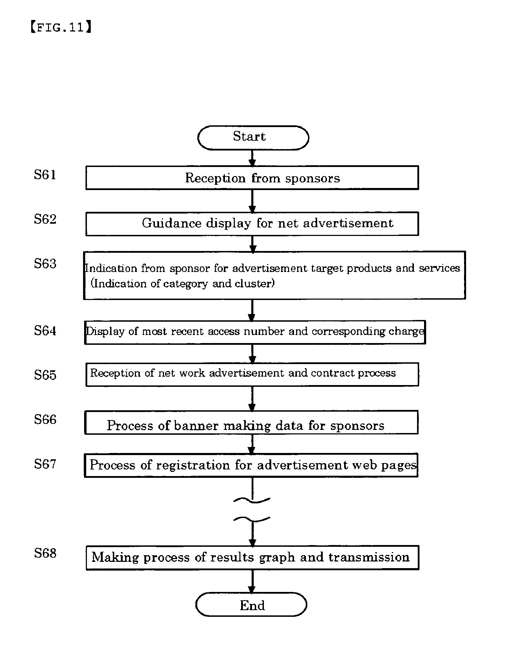

FIG. 11 is an operation flow chart of an acceptance means of a sponsor according to this invention.
First, at step S61, a sponsor accesses server 15 through net work 10. Server 15 displays guide for net advertisement application. Concrete content of the application is not shown here, but it is required that every necessary item must be inputted. At step S63, the sponsor indicates his target goods and/or services. This is the process of category and cluster specification. Sponsor are users belonging to a special cluster, and can supply effective advertisement displays to the users who select special categories.

When a category and a cluster are selected, the last access number and advertisement charge are displayed, at step S64. In other words, sponsors can get the information of the access number in the last month or in the last 6 months. The charge is calculated based on the results of the access number. If the sponsor consents to it, net application and the contract process is executed at step S65. At this step all necessary information of the sponsor are inputted.

Next, at step S66, banners for sponsors are newly made. In other words, banner list 40, including newly registered sponsor, will be automatically up dated, and banner database 50 will be so prepared. After that at step S67, advertisement web page 41 is newly registered. Sponsor registration is so finished. At step S68, graphical information will be periodically reported to the sponsor containing every category, every cluster, every period accesses. Sponsors can estimate their application to their selection of categories and cluster. So, they can change their selection afterwards.

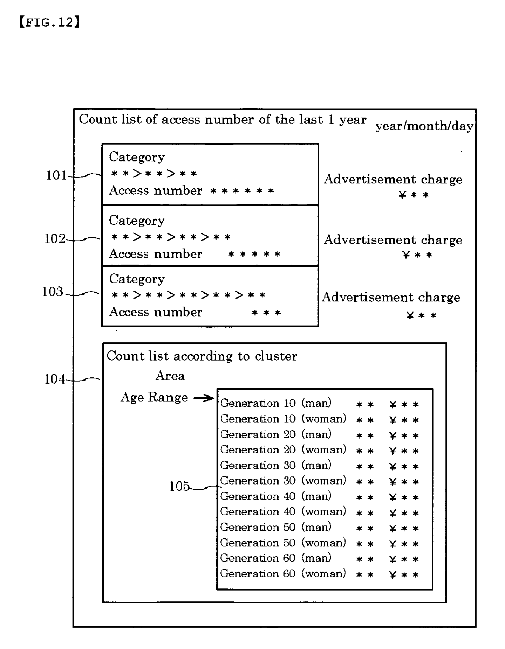

FIG. 12 is an explanation diagram showing a display example of an calculation of advertisement charge estimate to sponsors according to this invention.
This is the total access numbers in the last year. For instance, at the process of selection of upper category 101 to lower category 103, each access number is shown. And each corresponding charge is shown. To add this, access number to each cluster 104 is shown. If you target females in her 30 teens without living area, for instance, the advertisement charge 115 is shown. The advertisement charge for females of other teens are also shown. So you can specify your target every category, with the corresponding charge.

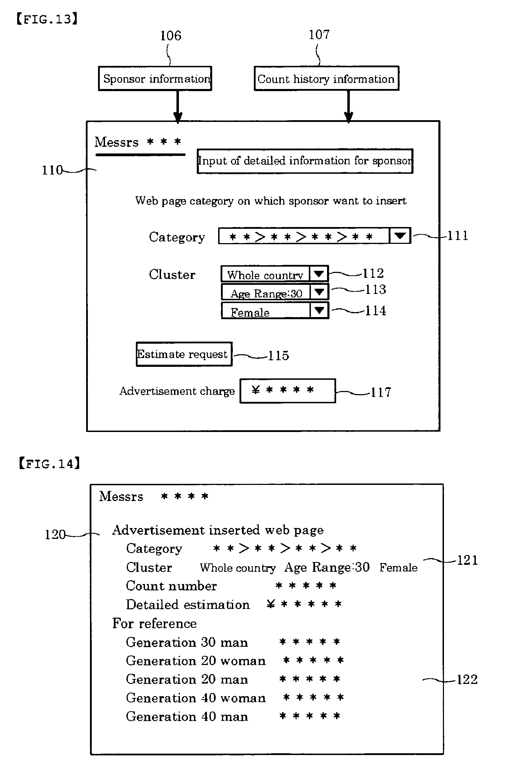

FIG. 13 is an explanation diagram showing an advertisement charge estimation to sponsors according to this invention.
The access numbers to web pages are memorized with combination of every category and cluster in memory device 30, with count history information according to advertisement charge estimation means 43 (in FIG 1). Advertisement information 106 such as information for sponsor services and charge process are also memorized in memory device 30.
After sponsor registration, the sponsor can see this display on his terminal equipment 110. If he wants to insert his advertisement, he selects category and user cluster with drop down list 111-114. With a click on estimate requirement button 115, advertisement charge is estimated and displayed. The charge is the estimation from the corresponding count during last period result. Generally, an advertisement charge is uniformly decided with the issue amount of magazines or its region. Against this, the estimation according to this invention is based on browsed count number of web page, which is classified with each category and user cluster. Because it is based on concrete result of users' browsing web pages, the advertisement is effective and reasonable charge can be set. And sponsors can insert their advertisement, choosing specialized category and cluster with reasonable charge.

FIG. 14 is an explanation diagram showing an example report of advertisement effect to sponsors according to this invention.
This is a report for sponsors, estimating with real count data. At the same time, with this report, sponsors can select the most suitable selection for category and cluster. Accordingly, as shown in FIG 14, on report display 120, titled "for reference", report in case of similar category and user cluster selection is included, adding to the real report of the last month. For this purpose, the extent "for reference" is previously prescribed. In this extent, imaginary browsed count number of the category and the cluster which the sponsor did not choose and the corresponding advertisement charge is estimated. The range setting is like this: same category and one or two neighboring to the cluster. In this example, if sponsor's cluster selection is female of her 30 teens, concerning age, cluster will be 20 teens and 40 teens, and concerning gender, cluster will be male, and the count numbers of that category is outputted. So, a sponsor can change his selection suitably, and can get the most effective advertisement. Existing advertisements cannot display such display for optimization.

Computer program used for above operation processing can be modularized in each unit block shown in FIG 1, or several operation units can be modularized in one unit. To say more, the computer program can be integrated in an existing application program for operation. For instance, the computer program for the execution of the present invention, may be memorized, as readable memory media, on CD-ROM which can be installed on various kinds of information equipments and used.

Server, explained above, can be the one, having existing hard wares and work as ordinary web server. Each web page is readable through net work, using corresponding URL(Uniform Resource Locator). Web pages are made in the form of HTML(Hyper Text Mark-up Language), SGML(Standard Generalized Mark-up Language), XML(eXtensible Markup Language), etc. That is a text format data which can be browsed through net work. Computer programs in web page data, are described with Vbscript(Visual Basic Script), JAVA, JAVA script etc., and operations are expected to be processed on browsers with the corresponding tool.

Computer programs installed in server processing devices can be divided into each independent program module, or can be constructed up in one program form. Also, all or parts of the computer program, according to this invention, can be constructed with hard ware, having equivalent function. The computer program can also be installed to existing application hard wares. The computer program to realize this invention can be memorized in various kinds of memory media, such as CD-ROM, and can be installed to information processing equipments for application. Also, it can be down loaded to any computer memory through net work.

## Claims

1. A web advertisement system comprising:
a memory device which memorizes web pages set in a web server on a web site comprising;
a user registering means which accepts the input of the information concerning a user who registers himself or herself with said web site, and memorizes the data on said memory device;
an information category selection means which selects the categories at the time of searching when said registered user makes or browses web pages;
a cluster getting means which gets a cluster from the information of said registered user who makes or browses said web pages and memorizes the information on said memory device;
a category getting means which gets the category information of said registered user selection of web pages, and memories the information on said memory device;
an advertisement selection means which gets advertising information specified with the combination taken with said cluster getting means and said category getting means;
a display editing means which makes automatically an advertisement display, using said advertisement information, gotten by said advertisement selection means; and
a display control means which controls to display an advertising display together with the web pages, browsed by said user.

2. A web advertisement system according to claim 1, wherein comprising:
a real time control means which detects, at time of said user's web page making, that said category selection means executed the corresponding web page selection process, starts said cluster getting means and said category getting means, sends the output to said advertisement display editing means, and controls said advertisement display to display the advertisement display made by said display editing means, together with said selected web pages.

3. A web advertisement system according to claim 1, wherein comprising:
a real time control means, which controls said memory device to memorize the results of the past output of category selection, including user information, detects said user's login to said web site, starts said cluster getting means and said category getting means, controls the category getting means to get category from said user information, sends the output to said display editing means, and controls to display the output, made by said display editing means, together with the selected web page.

4. A web advertisement system according to any of claim 1 to 3, wherein,
the same advertisement display still displaying, even when the browsing web page is changed, during the same user's operating time.

5. A web advertisement system according to any of claim 1 to 3, wherein said advertisement display comprising;
control buttons for selection of web pages with the corresponding advertisement.

6. A web advertisement system according to claim 5, wherein comprising:
first counter which, in case when control buttons for a sponsor are included on said advertisement display, counts the access numbers to the corresponding advertisement display;
second counter which counts, when said control buttons are clicked, the displayed numbers of the web page, including the sponsor's advertisement; and
a advertisement charge calculating means, which calculates charge for the sponsor, with first counter number and second counter number.

7. A web advertisement system according to claim 6, wherein,
said memory device memorizes the database of user accessed themes which are classified according to each category;
said information category selection means which, with users' operation, searches said data base and executes said users' selection; and
said cluster getting means which gets user cluster, using user information, inputted at the time of said user's operation for application.

8. A web advertisement system according to claim 7, wherein
every time when said user selects categories from upper to lower, a real time control means starts said cluster getting means and said category getting means to update the advertisement display to correspond the category.

9. A web advertisement system according to claim 8, wherein:
said advertisement charge calculation means makes said memory device to memorize the access numbers of all categories and cluster combinations; and
displays the count number and the corresponding charge of browsed web pages, in combination with the sponsor ordered category and the cluster.

10. A web advertisement system according to claim 9, wherein
the advertisement charge calculation means memorizes the count numbers of browsed web pages in combination with all categories and clusters in memory device; and,
when the advertisement charge calculation means calculates and displays the count number and charge to each sponsor, displays also the count and the charge corresponding to the combination of category and user cluster, to the range previously decided for each sponsor, which the sponsor did not order.

11. A web advertisement program for a computer set on a web server to operate the system comprising:
a memory device which memorizes web pages set in a web server on a web site comprising;
a user registering means which accepts the input of the information concerning a user who registers himself or herself with said web site, and memorizes the data on said memory device;
an information category selection means which selects the categories at the time of searching when said registered user makes or browses web pages;
a cluster getting means which gets a cluster from the information of said registered user who makes or browses said web pages and memorizes the information on said memory device;
a category getting means which gets the category information of said registered user selection of web pages, and memories the information on said memory device;
an advertisement selection means which gets advertising information specified with the combination taken with said cluster getting means and said category getting means;
a display editing means which makes automatically an advertisement display, using said advertisement information, gotten by said advertisement selection means; and
a display control means which controls to display an advertising display together with the web pages, browsed by said user.

12. A computer readable medium memorizing advertisement program, having the function to operate the system comprising:
a memory device which memorizes web pages set in a web server on a web site comprising;
a user registering means which accepts the input of the information concerning a user who registers himself or herself with said web site, and memorizes the data on said memory device;
an information category selection means which selects the categories at the time of searching when said registered user makes or browses web pages;
a cluster getting means which gets a cluster from the information of said registered user who makes or browses said web pages and memorizes the information on said memory device;
a category getting means which gets the category information of said registered user selection of web pages, and memories the information on said memory device;
an advertisement selection means which gets advertising information specified with the combination taken with said cluster getting means and said category getting means;
a display editing means which makes automatically an advertisement display, using said advertisement information, gotten by said advertisement selection means; and
a display control means which controls to display an advertising display together with the web pages, browsed by said user.

## Amended claims

### Amended claims under Art. 19.1 PCT

**1.** (Revised) A web advertisement system comprising:
a memory device which is provided in a web server, used for the information exchange between registered users, and memorizes browsing web pages, made by said users;
a user registration means which, at time of user registration, accepts the input of information for classification of said user, according to said user's property, executes the user registration process, and memorizes them on said memory device;
an information category selection means which, at time of said user's making of a web page, controls the corresponding user to select the category of said web page, gives web pages, the category to classify the web page information according to their properties, and, before the browsing of said user, selects a web page for the display of the corresponding web page;
a cluster getting means which gets a user cluster of the users who make or browse said web pages, referring said user's information, and memorize them on said memory device;
a category getting means which gets the category of said web pages with the control of said information category selection means and memorizes them on said memory device;
an advertisement selection means which gets an advertising information specified with the combination of the categories, taken with said cluster getting means and said category getting means;
an automatic web display editing means which makes automatically the corresponding advertising display, using said advertisement selecting means; and
a display control means which controls to display an advertising display together with the web pages, browsed by said user.

**2.** A web advertisement system according to claim 1, wherein comprising:
a real time control means which detects, at time of said user's web page making, that said category selection means executed the corresponding web page selection process, starts said cluster getting means and said category getting means, sends the output to said advertisement display editing means, and controls said advertisement display to display the advertisement display, made by said display editing means, together with said selected web pages.

**3.** A web advertisement system according to claim 1, wherein comprising:
a real time control means, which controls said memory device to memorize the results of the past output of category selection, including user information, detects said user's login to said web site, starts said cluster getting means and said category getting means, controls the category getting means to get category from said user information, sends the output to said display editing means, and controls to display the output, made by said display editing means, together with the selected web page.

**4.** A web advertisement system according to any of claim 1 to 3, wherein said advertisement display comprising;
control buttons for selection of web pages with the corresponding advertisement.

**5.** A web advertisement system according to claim 5, wherein comprising:
first counter which, in case when control buttons for a sponsor are included on said advertisement display, counts the access numbers to the corresponding advertisement display;
second counter which counts, when said control buttons are clicked, the displayed numbers of the web page, including the sponsor's advertisement; and
a advertisement charge calculating means, which calculates charge for the sponsor, with first counter number and second counter number.

**6.** A web advertisement system according to claim 1, wherein,
said memory device memorizes the database of user accessed themes which are classified according to each category;
said information category selection means which, with users' operation, searches said data base and executes said users' selection; and
said cluster getting means which gets user cluster, using user information, inputted at the time of said user's operation for application.

**7.** A web advertisement system according to claim 1, wherein
every time when said user selects categories from upper to lower, a real time control means starts said cluster getting means and said category getting means to update the advertisement display to correspond the category.

**8.** A web advertisement system according to claim 1, wherein:
said advertisement charge calculation means makes said memory device to memorize the access numbers of all categories and cluster combinations; and
displays the count number and the corresponding charge of browsed web pages, in combination with the sponsor ordered category and the cluster.

**9.** A web advertisement system according to claim 1, wherein
the advertisement charge calculation means memorizes the count numbers of browsed web pages in combination with all categories and clusters in memory device; and,
when the advertisement charge calculation means calculates and displays the count number and charge to each sponsor, displays also the count and the charge corresponding to the combination of category and user cluster, to the range previously decided for each sponsor, which the sponsor did not order.

**10.** A web advertisement system according to claim 1, wherein
the information showing communication means which is used for the communication only between server and user, and not open to other users; and
a communication relaying means which, accepting a communication requirement from a user to another user, refers to the user information, and relays and transmits the user's message to the another user, using the communication means.

**11.** A web advertisement system according to claim 1, wherein comprising:
a real time control means which, when an answering web page to a questioner is made, adds it to the web pages, memorized in the memory device; and
the communication relaying means, which automatically contacts the questioner and lets him know that the answer to his question came and URL of the answering web page.

**12.** Revised)A web advertisement program for a computer, set on a web server, having the function to operate the system comprising:
a memory device which is provided in a web server, used for the information exchange between registered users, and memorizes browsing web pages, made by said users;
a user registration means which, at time of user registration, accepts the input of information for classification of said user, according to said user's property, executes the user registration process, and memorizes them on said memory device;
an information category selection means which, at time of said user's making of a web page, controls the corresponding user to select the category of said web page, gives web pages, the category to classify the web page information according to their properties, and, before the browsing of said user, selects a web page for the display of the corresponding web page;
a cluster getting means which gets a user cluster of the users who make or browse said web pages, referring said user's information, and memorize them on said memory device;
a category getting means which gets the category of said web pages with the control of said information category selection means and memorizes them on said memory device;
an advertisement selection means which gets an advertising information specified with the combination of the categories, taken with said cluster getting means and said category getting means;
an automatic web display editing means which makes automatically the corresponding advertising display, using said advertisement selecting means; and
a display control means which controls to display an advertising display together with the web pages, browsed by said user.

**13.** Revised)A computer readable medium memorizing advertisement program to web advertisement program, having the function to operate the system comprising:
a memory device which is provided in a web server, used for the information exchange between registered users, and memorizes browsing web pages, made by said users;
a user registration means which, at time of user registration, accepts the input of information for classification of said user, according to said user's property, executes the user registration process, and memorizes them on said memory device;
an information category selection means which, at time of said user's making of a web page, controls the corresponding user to select the category of said web page, gives web pages, the category to classify the web page information according to their properties, and, before the browsing of said user, selects a web page for the display of the corresponding web page;
a cluster getting means which gets a user cluster of the users who make or browse said web pages, referring said user's information, and memorize them on said memory device;
a category getting means which gets the category of said web pages with the control of said information category selection means and memorizes them on said memory device;
an advertisement selection means which gets an advertising information specified with the combination of the categories, taken with said cluster getting means and said category getting means;
an automatic web display editing means which makes automatically the corresponding advertising display, using said advertisement selecting means; and
a display control means which controls to display an advertising display together with the web pages, browsed by said user.

**14.** Added) A web advertisement system according to claim 1, wherein, comprising:
an item of the user information concerning the communication methods which is used only for communication between said server and a user, and not used for other users, is included in said user information; and
a communication relaying means which, when a communication requirement from a user to another user is accepted, referring the users' information, executes the transmission of this message from one side user to the other side user.

**15.** Added) A web advertisement system according to claim 1, wherein comprising:
a real time control means which, when the answering web page to the web page, made by the questioner, is made, adds the web page to the web pages memorized in the memory device; and
a communication relay means which notifies the questioner automatically that there came the answer and URL for the answer web page.
